# FASCICULE DE BREVET EUROPEEN

(11) **EP 0 934 489 B1**
(45) Date de publication et mention de la délivrance du brevet: **02.07.2003**
(21) Numéro de dépôt: 97911311.5
(22) Date de dépôt: 21.10.1997
(51) Int. Cl.: F23G 5/027, F23G 5/46

(54) **INSTALLATION POUR LE TRAITEMENT PAR THERMOLYSE ET POUR LA VALORISATION ENERGETIQUE DES DECHETS**
ANLAGE ZUR THERMOLYSE UND ZUR ENERGETISCHEN VERWERTUNG VON ABFALL
PLANT FOR THERMOLYSIS AND ENERGETIC UPGRADING OF WASTE PRODUCTS

(30) Priorité: 22.10.1996 FR 9613090; 25.04.1997 FR 9705426
(43) Date de publication de la demande: 11.08.1999
(73) Titulaire: TRAIDEC S.A., 69690 Bessenay (FR)
(72) Inventeur: CHAMBE, Eric, F-69690 Bessenay (FR); CHAMBE, Maurine, F-69690 Bessenay (FR); HAXAIRE, Pascal, F-69770 Montrottier (FR)
(74) Mandataire: Palix, Stéphane
(86) Numéro de dépôt international: FR9701886
(87) Numéro de publication internationale: WO98017950

(56) Documents cités:
- EP-A- 0 302 310
- EP-A- 0 692 677
- EP-A- 0 694 737
- WO-A-96/11742
- DE-A- 19 533 605
- FR-A- 2 715 087
- GB-A- 1 562 492
- US-A- 4 774 895
- US-A- 5 505 144

## Description

### Domaine Technique

L'invention concerne une installation pour le traitement par thermolyse et simultanément pour la valorisation énergétique des déchets contenant une fraction organique.

### Techniques antérieures

Le traitement des déchets contenant une fraction organique est bien connu, notamment pour le traitement de déchets aussi divers que les résidus de broyage automobiles (RBA), les déchets hospitaliers dits également d'activité de soins, les pneumatiques usagés, les déchets verts ou résultant de biomasses, les déchets urbains et ménagers, les farines de viande, mais également les boues de stations d'épuration et les boues de produits pétroliers divers. Le traitement de ces déchets devient de plus en plus préoccupant par suite des quantités de plus en plus importantes à traiter et de l'augmentation du coût de ces traitements.

La dissociation thermique des déchets sous pression réduite et à haute température de matière contenant une fraction organique, est bien connue (voir notamment les documents US- 4.077.868, US- 4.839.021 et CA- 1.163.595).

Pour l'essentiel, une installation de dissociation thermique à pression réduite de déchets contenant une fraction organique, comprend essentiellement:
- une unité de chargement et d'amenée des déchets à traiter ; et
- un réacteur de dissociation thermique sous pression réduite et à haute température, par exemple à une température comprise entre 400 °C et 1000 °C, notamment aux environs de 500 °C, sous une pression comprise entre 0,1 atm et 1 atm. Dans le document WO- 96/ 11.742, le Demandeur a décrit une installation du type
en question, dans laquelle entre les moyens d'amenée et le réacteur, on dispose deux chambres, placées en parallèles, reliées chacune aux moyens d'amenée du réacteur permettant ainsi le chargement à pression atmosphérique dans l'une des deux chambres pendant que l'autre se décharge à pression réduite dans le réacteur. Cette installation discontinue/continue bien adaptée au traitement de grosses quantités, présente toutefois l'inconvénient de nécessiter un investissement important. Par ailleurs, la production d'huiles par condensation au cours du traitement est sur le plan pratique difficile à gérer industriellement.

On connaît d'après le document EP- 0.692.677 une installation de traitement thermique de déchets ménagers. Cette installation comprend un four rotatif de thermolyse, au moins un moyen de combustion des gaz de thermolyse, un échangeur ou une chaudière, un dispositif d'épuration des solides carbonés, un dispositif de combustion alimenté par une partie au moins des combustibles solides issus du moyen de post-traitement, et un moyen destiné à véhiculer les gaz chauds issus du dispositif de combustion vers l'échangeur ou la chaudière.

On connaît également d'après le document GB- 1.562.492 une installation destinée à utiliser des déchets comme combustible supplémentaire pour un four. L'installation comprend un four, un réacteur pour pyrolyser les déchets, des moyens pour transporter les déchets vers le réacteur de pyrolyse, des moyens pour faire passer des produits issus de la réaction de pyrolyse vers la zone de combustion du four de façon à être utilisés comme combustible, et des moyens pour faire passer des fumées chaudes à partir du four vers le réacteur de pyrolyse afin de réaliser la pyrolyse des déchets.

En outre et comme dit précédemment, la destruction des farines de viandes impropres à la consommation animale devient préoccupant, notamment avec le risque de présence de prions dans ces farines, de sorte que plusieurs techniques ont été proposées à ce jour pour incinérer les farines.

La première technique consiste à mélanger ces farines avec des déchets urbains, puis à pyrolyser le tout dans des incinérateurs urbains, dont on sait qu'ils sont déjà saturés. Par ailleurs, la faible granulométrie de ces farines entraîne des risques d'envolée, perturbant le fonctionnement des incinérateurs. Cette technique est tellement coûteuse qu'elle n'a pas connu de développement.

On a également proposé d'incinérer ces farines dans des fours tournants inclinés. Là également, la faible granulométrie de ces farines entraîne un risque d'envolée et l'écoulement dans les fours est souvent mal réalisé. Enfin, les fumées produites doivent être traitées par des équipements spéciaux qui grèvent de manière rédhibitoire le coût de l'installation.

L'invention pallie ces inconvénients. Elle vise une installation pour le traitement par thermolyse des déchets et pour la valorisation énergétique de ces déchets, qui soit bien adaptée au traitement des déchets les plus divers, en petite et moyenne capacités, avec un bon rapport entre l'investissement et le fonctionnement. Elle vise plus particulièrement une installation du type en question qui soit fiable et robuste, et dont les conditions opératoires respectent scrupuleusement l'environnement.

Un autre objectif de l'invention est de proposer une installation susceptible de procéder à un traitement complet des sous produits de thermolyse jusqu'à l'obtention de déchets ultimes, c'est à dire de déchets non valorisables dans les conditions économiques actuelles.

L'invention vise une installation du type en question dans laquelle on récupère l'énergie produite pendant le traitement pour faire fonctionner en partie et de manière autonome l'installation elle-même et une partie de l'unité susceptible de produire ces déchets.

### Description sommaire de l'invention

L'invention concerne une installation pour le traitement par thermolyse de déchets comportant une fraction organique et présentant une granulométrie contrôlée, et simultanément pour la valorisation énergétique de ces déchets, du type comprenant essentiellement :
- une unité de chargement et d'amenée des déchets à traiter ;
- un réacteur de thermolyse de dissociation thermique sous pression réduite à haute température,
- en amont et en aval du réacteur, un sas destiné à maintenir une dépression dans le réacteur pour assurer la thermolyse dans une atmosphère à très faible teneur en oxygène ;
- des premiers moyens pour récupérer la fraction gazeuse organique formée pendant la thermolyse, et des moyens pour amener cette fraction gazeuse à une chambre de combustion alimentant un générateur de vapeur ;
- des seconds moyens pour récupérer les produits solides carbonés formés pendant la thermolyse, et pour amener ces produits solides à une chambre de combustion alimentant un générateur de vapeur ou un système d'évacuation.

L'installation est caractérisée :
- en ce que les premiers moyens pour récupérer la fraction gazeuse sont disposés en partie supérieure du réacteur ;
- en ce que les seconds moyens pour récupérer les produits solides carbonés sont disposés au bas du réacteur ; et
- en ce que les gaz de la chambre de combustion et la vapeur produite par le générateur de vapeur, alimentent à leur tour l'unité de production des déchets et/ou un moyen de séchage préalable des déchets, disposé juste en amont du réacteur.

En d'autres termes, l'invention consiste à chauffer les déchets présentant une granulométrie contrôlée dans des conditions aptes à dissocier ces déchets, essentiellement en deux phases, respectivement une phase gazeuse et une phase solide, et ce en quasi-absence d'oxygène, mais sous pression réduite, voire sous atmosphère gazeuse.

L'invention consiste à récupérer la phase gazeuse et la phase solide pour les valoriser en produisant de l'énergie dans une chambre de combustion destinée à chauffer de la vapeur qui alimente à son tour, soit l'unité de production de déchets et/ou vise à sécher préalablement les déchets avant leur arrivée au réacteur.

En pratique, la thermolyse, désignée également sous le terme de «pyrolyse», est effectuée à une température comprise entre 400 et 1000°C, notamment au voisinage de 500°C, avec une pression dans le réacteur de 5000 à 40 000, de préférence 10 000 Pascals en dessous de la pression atmosphérique. La durée de séjour des déchets dans ce réacteur est de l'ordre de plusieurs dizaines de minutes, par exemple de l'ordre de trente minutes.

Comme déjà dit, avantageusement, selon la nature des déchets à traiter, ceux-ci sont préalablement broyés pour présenter une granulométrie et une consistance physique contrôlées, voire homogènes.

En pratique, on définit une granulométrie comprise entre 1 et 10 centimètres, ces bornes n'étant aucunement limitatives.

De même, avantageusement, les déchets peuvent subir un séchage préalable destiné à abaisser la teneur de ces déchets en eau. Ce chauffage effectué dans une enceinte appropriée peut, selon la nature des déchets à traiter, être effectué de deux manières, à savoir directe ou indirecte. Dans le séchage direct, la masse des déchets est chauffée par une circulation d'air chaud ou de vapeur recyclé à partir du générateur caractéristique de l'invention, ou d'air chaud recyclé depuis la chambre de combustion. Ce mode de séchage préalable est particulièrement approprié pour des déchets dont la fraction solide volatile (poussières) est faible, tels que les RBA. Lorsque l'on traite des boues de station d'épuration, il est préférable de procéder à un chauffage indirect, c'est-à-dire de chauffer l'enceinte par l'extérieur, tout en assurant un certain malaxage destiné à briser le produit pour augmenter la surface de contact avec l'air.

Dans une forme d'exécution avantageuse, sur le parcours des déchets, entre l'organe d'amenée et le réacteur, on dispose un moyen d'ajout d'un agent de neutralisation des composants agressifs, tels que par exemple les halogènes, le soufre, ce qui permet d'éviter la présence ultérieure de composés nocifs (SO₂ HCl, HF) dans les rejets atmosphériques. Cet agent de neutralisation, tel que par exemple du carbonate de calcium, est incorporé dans les déchets broyés pendant leur convoyage entre l'organe d'amenée et le réacteur de thermolyse. Ce broyage des déchets autorise une meilleure répartition de l'agent neutralisant et par voie de conséquence, une meilleure efficacité de cette neutralisation.

Le réacteur de thermolyse précédé du sas caractéristique de l'invention, fonctionne en l'absence d'oxygène à une température, comme déjà dit, comprise entre 400 et 1000°C, de préférence aux alentours de 500°C, et la pression du réacteur est maintenue de 5000 à 40 000, de préférence 10 000 Pascals en dessous de la pression atmosphérique. Il s'ensuit que les déchets à traiter qui généralement avancent en couches minces, se décomposent alors sous l'action de la chaleur en deux sous-produits, respectivement un gaz pour sensiblement les deux tiers, et un résidu solide carboné pour sensiblement un tiers. La durée de séjour et d'écoulement dans le réacteur est de plusieurs dizaines de minutes, notamment de trente minutes. Le chauffage du réacteur est assuré par tous moyens appropriés, tels que notamment l'électricité.

Selon l'invention, les deux sous produits de la thermolyse, respectivement le gaz et le résidu solide carboné, sont récupérés, le premier en haut du réacteur et le second en bas de celui-ci.

Selon une autre caractéristique de l'invention, l'installation comporte au moins un sas disposé en amont et en aval du réacteur. Ce sas peut être constitué de toute manière connue, par exemple par une vis hélicoïdale de compression, par des pompes, par des vannes à guillotine ou analogues.

Selon une autre caractéristique de l'invention, les gaz de thermolyse, récupérés sur le haut du réacteur, sont acheminés sous l'effet d'une aspiration vers une chambre de combustion qui alimente à son tour un générateur de vapeur. Il importe que pendant le transfert depuis le réacteur jusqu'à la chambre de combustion, la fraction gazeuse de thermolyse soit maintenue à haute température. Parallèlement, les produits solides carbonés récupérés en bas du réacteur sont acheminés vers une autre chambre de combustion pour y être brûlés, cette seconde chambre alimentant également à son tour un autre générateur de vapeur, ou à défaut un système d'évacuation en vue d'une valorisation finale, voire une mise en décharge.

Plus précisément, lorsque le produit initial contient un agent polluant, le traitement par thermolyse permet de concentrer l'agent polluant dans un des deux sous produits, en général le sous produit solide, et ainsi d'effectuer le traitement des fumées sur seulement une partie des produits et non sur la totalité, ce qui se traduit par une économie appréciable.

Avantageusement, le produit solide carboné obtenu après thermolyse peut être séparé en deux sous produits, un produit non combustible et un produit combustible, seul ledit produit combustible étant acheminé dans la chambre de combustion, le produit non combustible étant revalorisé.

Ainsi, dans le cas du traitement de résidus de broyage automobiles, on sépare le métal non combustible de la fraction combustible, ce qui permet d'améliorer le rendement et l'efficacité de l'installation.

Dans une forme d'exécution simplifiée, les gaz de combustion et de résidus solides carbonés produits par le réacteur sont acheminés vers la même chambre de combustion qui alimente un seul et même générateur de vapeur. Dans une variante, la chambre de combustion comporte deux foyers, respectivement un premier foyer pour les produits solides carbonés, un second pour les gaz.

Cette combustion séparée des deux sous-produits respectivement gazeux et solides, permet d'optimiser la qualité de la combustion et par voie de conséquence les rendements. Les gaz chauds de combustion sont ensuite globalisés pour être valorisés sous forme énergétique pour la production de vapeur ou d'eau chaude.

Comme déjà dit, avant globalisation, on peut après avoir séparé le sous produit solide polluant, traiter la fumée issue de la combustion de ce sous-produit dans une unité de traitement de filmées, destinée à récupérer les agents polluants pour les mettre en décharge de résidus ultimes.

Ainsi, on a pu déterminer que le traitement de 200 kilos par heure de déchets hospitaliers permet de produire par heure environ 600 kilos de vapeur à 8 bars.

Après avoir été valorisés, les gaz de combustion sont rejetés dans l'atmosphère par une cheminée traditionnelle dans les conditions évitant la formation d'un panache.

En revanche, les produits solides carbonés, après avoir été valorisés dans la chambre de combustion, conduisent à des résidus ultimes, tels que des cendres de quantités nettement inférieures à celles des mâchefers issus de l'incinération traditionnelle, notamment lorsqu'on procède, avant combustion à une séparation de la fraction non combustible métallique et de la fraction combustible.

### Brève description des figures

La figure 1 illustre schématiquement une installation conforme à l'invention.

Les figures 2 et 3 montrent cette même installation en vue perspective sommaire, respectivement vue de dessus de trois quart (figure 2), vue de côté trois quart (figure 3).

La figure 4 est une représentation schématique sommaire d'une première installation simplifiée conforme à l'invention.

La figure 5 est une représentation schématique d'une seconde installation de l'invention.

La figure 6 est une représentation de l'installation de l'invention appliquée au traitement des farines de viande.

### Manière de réaliser l'invention

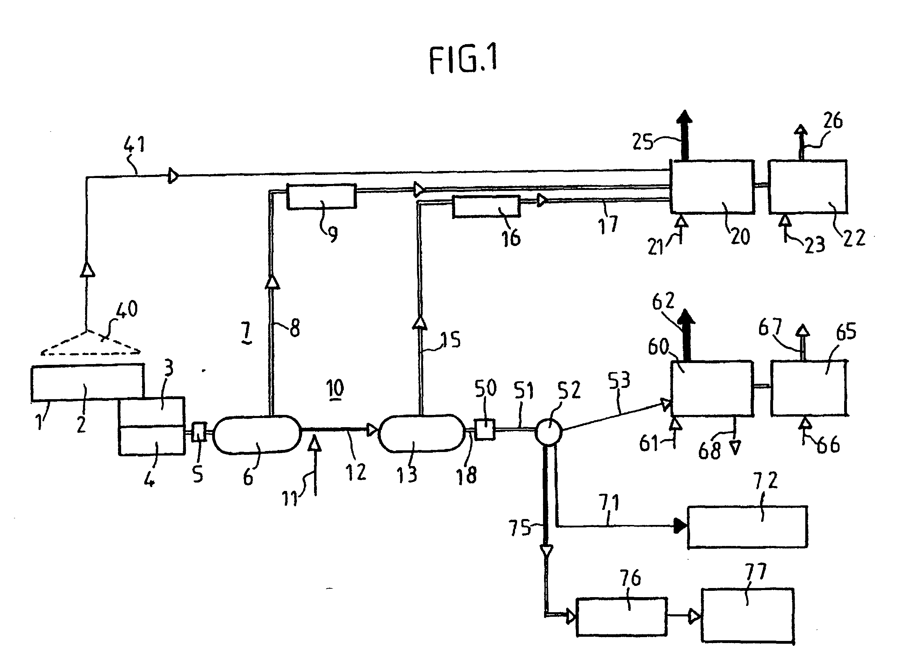

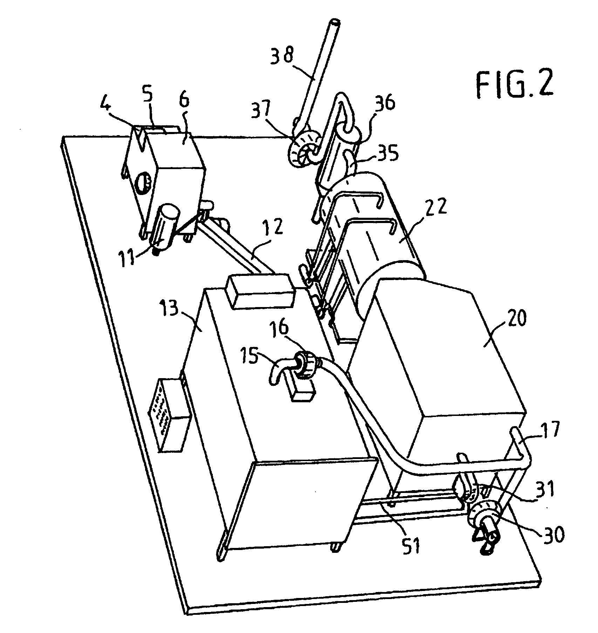

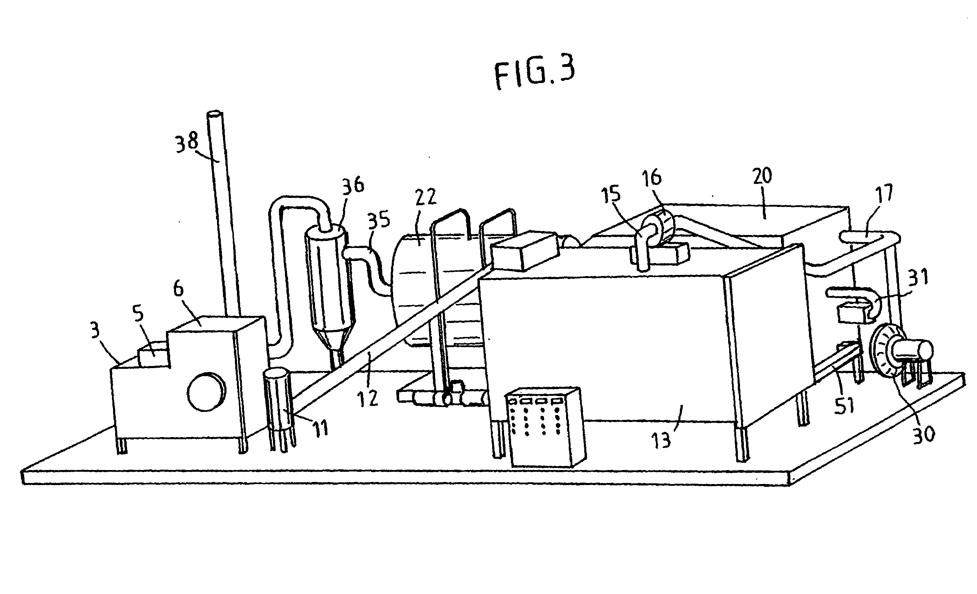

En se référant aux figures 1 à 3, l'installation conforme à l'invention comprend un poste (1) de réception des déchets (2) à traiter comprenant une fraction organique, tels que des déchets hospitaliers, des pneumatiques usagés, des résidus de broyage automobiles (RBA), des déchets verts ou de biomasses, des déchets urbains ou ménagers, des boues de station d'épuration, voire des déchets pétroliers.

Ces déchets (2) sont amenés dans une unité de broyage (3) destinée à les amener à une granulométrie contrôlée, de préférence homogène. Les déchets broyés sont ensuite amenés dans une trémie (4), puis dans un sas (5), et de là dans une enceinte de séchage (6) chauffée directement ou indirectement. Les vapeurs (7) issues du séchage sont captées en haut de l'enceinte (6) par une tuyauterie (8) pour être amenées à la chambre de combustion. Les déchets séchés (10) sont tout d'abord additionnés en (11) d'un agent neutralisant tel que du carbonate de calcium, puis sont ensuite acheminés par un convoyeur (12) jusqu'à l'entrée du réacteur (13).

Dans une variante, les déchets (2) sont stockés dans un silo de stockage tampon en amont du réacteur (13) et sont directement acheminés dans ce dernier, sans étapes préalables de broyage et de séchage.

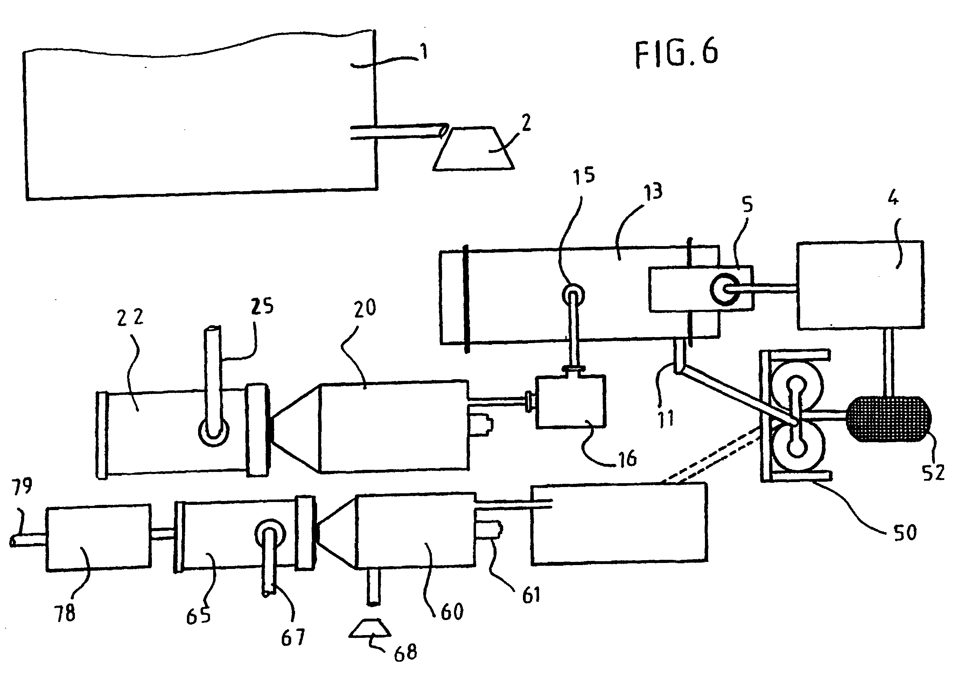

Ce réacteur de thermolyse (13) peut être du type de celui qui est décrit dans le document WO-96/11742 du Demandeur, notamment aux figures 6,9 et 10 de ce document, soit d'un autre type connu équivalent. Ce réacteur (13) est chauffé de préférence à l'électricité. Il est important que ce réacteur (13) chauffé à une température voisine de 500°C, avec une dépression de l'ordre de dix mille (10 000) Pascals en dessous de la pression atmosphérique, fonctionne en carence d'oxygène. La durée de séjour des déchets (10) dans ce réacteur est d'environ trente minutes.

Pour éviter toute inflammation du carbone contenu dans les déchets au contact d'oxygène qui pourrait être introduit accidentellement dans le réacteur, on prévoit la mise en place au niveau du réacteur, d'une alimentation d'azote.

La thermolyse provoque la formation de deux sous-produits, respectivement une fraction gazeuse organique récupérée vers le haut par la tuyauterie (15) et une fraction de produits solides carbonés récupérés vers le bas (18).

Selon une caractéristique de l'invention, l'installation comprend des moyens (15) pour récupérer en haut du réacteur (13), notamment à l'aide d'une tuyauterie et d'un ventilateur (16), la fraction gazeuse organique formée pendant la thermolyse pour l'amener à une chambre de combustion (20). Cette chambre de combustion de type cylindrique horizontale, présente une arrivée (21) de gaz propane permettant de réaliser un appoint, de garantir le maintien à température pendant les phases de démarrage et d'arrêt et d'assurer une flamme pilote. Cette chambre de combustion (20) alimente à son tour un générateur de vapeur (22), par exemple du type chaudière à double circulation alimentée en eau (23).

Dans une forme de réalisation avantageuse, les gaz de combustion propres de la chambre de combustion (20) sont amenés par une tubulure (25) dans le sécheur (6), notamment pour assurer un séchage direct des déchets à traiter. La vapeur produite par le générateur (22) est amenée par une tubulure (26) au même sécheur (6) pour assurer le séchage indirect des déchets à traiter ou pour être utilisée sur le site de production des déchets (1).

La référence (30) désigne un ventilateur d'amenée d'air de combustion et la référence (31) le brûleur de la chambre de combustion (20). Parallèlement, la tubulure (8) d'extraction des vapeurs du sécheur (6) est associée à un aspirateur (9) qui amène ces vapeurs dans la chambre même de combustion (20).

Les fumées issues du générateur (22) sont amenées par la tubulure (35) dans un cyclone (36) d'où elles sont extraites par un ventilateur (37) relié à la cheminée extérieure (38) de rejet dans l'atmosphère.

Dans une variante avantageuse, l'aire (1) de réception des déchets (2) est surmonté d'une hotte (40) associée à une tubulure (41) amenant l'air de dépression dans la chambre de combustion (20) pour servir d'appoint d'air de combustion. De la sorte, grâce à un ventilateur non représenté, les vapeurs se dégageant naturellement des déchets notamment hospitaliers, sont évacuées puis brûlées, et ne se répandent pas dans l'enceinte de traitement.

Selon une autre caractéristique de l'invention, les résidus solides carbonés (18) formés pendant la thermolyse passent tout d'abord à travers un sas (50) analogue à (5), puis sur un convoyeur (51) permettant d'extraire ces résidus au bas du réacteur (13).

Avantageusement, les résidus solides carbonés (18) sont refroidis de façon indirecte avant ou après le sas (50), de manière à éviter tout risque d'explosion.

En outre, pour de grosses installations, le sas (50) peut être constitué de deux silos parallèles remplis sous pression réduite et vidés alternativement sous pression atmosphérique.

Ces résidus solides (18) carbonés sont riches en carbone, mais également en produits polluants, tels que du chlore, du soufre, et contiennent des fractions inorganiques, tels que du métal, du verre, des cailloux, voire des résidus multiples. Ces résidus qui sont noyés dans la poudre très fine pulvérulente résultant de la thermolyse de la fraction organique, sont criblés en (52) selon leur granulométrie et leur nature permettant d'obtenir une fraction carbonée (53) et une fraction inorganique (71, 75).

La fraction carbonée (53) est amenée à une seconde chambre de combustion (60) analogue à (20), alimentée également en gaz propane (61), et dont la sortie des gaz (62) analogue à (25) peut être reliée au sécheur (6). Cette chambre de combustion est associée comme précédemment à un générateur de vapeur (65) alimenté en eau (66) pour fournir de la vapeur en (67) analogue à (26), pour être relié également au sécheur (6). Les cendres de combustion sont retirées en (68) pour être mises en décharge.

La fraction inorganique (71, 75) comportant essentiellement des métaux, du verre, des cailloux, des résidus ultimes, fait l'objet d'un criblage complémentaire pour stocker (72) puis récupérer les matériaux recyclables (71) d'une part, et la fraction non valorisable (75) constituée de résidus solides d'autre part, qui sont évacués (76) pour être mis en décharge (77).

Selon un mode de réalisation avantageux, le criblage effectué en (52) consiste à séparer les métaux ferreux de la fraction carboné (53) obtenue après thermolyse, par séparation magnétique, et parallèlement séparer les métaux non ferreux de ladite fraction carboné par séparation par induction.

Les métaux ferreux obtenus sont ensuite valorisés tandis que les métaux non ferreux sont soumis à un nouveau criblage permettant de séparer la partie minérale d'un coté et ainsi obtenir une poudre carbonée de l'autre, laquelle est ensuite acheminée à la chambre de combustion.

Les vapeurs (26,67) produites par les générateurs (22,65) sont utilisées soit pour sécher en (6) les déchets (1) à traiter et/ou pour alimenter en énergie l'unité de production de ces déchets.

De la sorte, l'installation ne rejette à l'extérieur en (38) que des fumées propres (25) et des résidus ultimes (77) ou des cendres (68) valorisables, puisque toute l'énergie produite est transformée en vapeur pour être réinjectée dans l'installation ou pour être valorisée en amont.

Les fractions gazeuses (8,15) amenées dans la première chambre de combustion (20), sont brûlées à une température voisine de 850°C pendant deux secondes environ. Comme déjà dit, il importe que la fraction gazeuse (8, 15) soit conduite à température, notamment par chauffage de la tuyauterie ou injection d'une faible quantité d'oxygène pour brûler une partie des gaz. La destruction thermique est alors complète, ce qui permet d'optimiser la valorisation du contenu énergétique des déchets sous forme de vapeur (26,67).

L'installation selon l'invention permet donc de traiter avec succès les déchets les plus variés comportant une fraction organique. Elle permet en outre et surtout une valorisation énergétique de ce traitement par thermolyse en permettant la récupération en deux phases, respectivement une phase gazeuse (15) et une phase solide (18), et la combustion de ces deux phases (20,60) permet de produire de la vapeur (26,67) (ou de l'eau chaude) destinée à alimenter le séchage (6) et/ou l'unité de production des déchets (1). Ainsi, en cours de fonctionnement, l'installation est presque autonome énergétiquement, ce qui la rend très attractive en termes d'investissement et de fonctionnement.

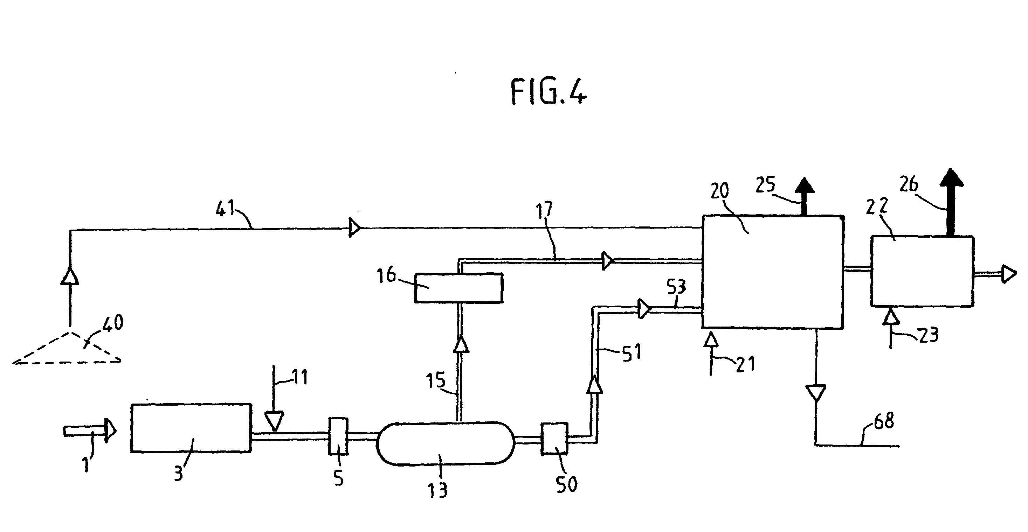

La figure 4 illustre une autre forme de réalisation simplifiée de l'invention. Par commodité, on a repris les mêmes références qu'à la figure 1. Dans cette installation, les déchets à traiter présentant un taux d'humidité acceptable, il n'y a pas de sécheur (6), d'autant que la faible capacité (200 kg/h) ne justifie pas un investissement lourd (sécheur + chambre de combustion spécifique).

Dans cette version simplifiée, outre l'absence du sécheur (6), la chambre de combustion (20) est unique, mais présente un double foyer, respectivement un premier foyer pour traiter les vapeurs de thermolyse amenées par la tubulure (17) et un second foyer pour traiter les résidus carbonés (53) amenés par le convoyeur (51). Cette forme de réalisation simplifiée est avantageuse pour le traitement des déchets hospitaliers de faible capacité, par exemple entre 100 et 300 kg/h.

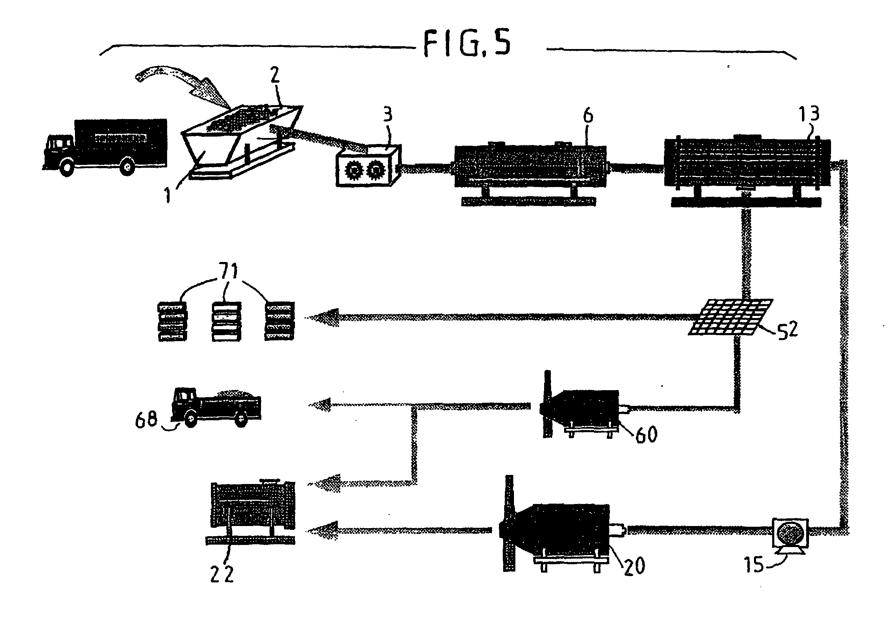

La figure 5 illustre une seconde forme de réalisation simplifiée de l'invention. Par commodité, on a repris les mêmes références qu'à la figure 1.

Dans cette installation, les déchets à traiter sont acheminés dans une unité de broyage puis sont ensuite séchés avant d'être soumis à l'opération de thermolyse dans le réacteur. La fraction gazeuse organique obtenue est amenée dans une chambre de combustion, laquelle alimente un unique générateur de vapeur.

Parallèlement, les produits solides carbonés obtenus après thermolyse sont soumis à un criblage permettant de séparer les métaux ferreux par séparation magnétique, et les métaux non ferreux par induction magnétique, afin de ne garder que la fraction carbonée du sous-produit solide. Cette fraction carbonée est ensuite conduite à la chambre de combustion, laquelle produit d'une part des cendres et d'autre part, alimente l'unique générateur de vapeur.

Cette forme de réalisation simplifiée est particulièrement avantageuse dans la mesure où elle permet de valoriser séparément les fractions métalliques et non métalliques du produit solide obtenu après thermolyse.

Sur la figure 6, on a représenté l'installation de l'invention appliquée au traitement des farines de viande. On a repris sur ce schéma les mêmes références que pour les autres figures.

Cette installation comprend une unité de production de farines de viandes symbolisée par la référence (1). Cette unité produit des farines sèches (2) destinées à être détruites, car impropres à la consommation animale. Ces farines (2) sont amenées à une trémie (4) où elles s'écoulent par gravité dans un sas (5), par exemple à vis hélicoïdale de compression. Ce sas (5) est relié à un réacteur de thermolyse (13), du type de celui décrit précédemment.

Le réacteur (13) est chauffé à une température voisine de 500°C avec une dépression de l'ordre de dix mille (10 000) Pascals en dessous de la pression atmosphérique et la durée de séjour des farines dans ce réacteur (13) est d'environ trente minutes. La thermolyse provoque la formation de deux produits, respectivement une fraction gazeuse organique récupérée vers le haut par la tuyauterie (15), et une fraction de résidus solides carbonés récupérés vers le bas (18).

La fraction gazeuse organique formée pendant la thermolyse est amenée par la tuyauterie (15) à un ventilateur (16) relié à son tour à une première chambre de combustion (20), par exemple du type cylindrique horizontal. Cette chambre (20) alimente à son tour un premier générateur de vapeur (22), par exemple du type «chaudière à double circulation», relié par une tubulure (25) à l'unité (1) de production de farines.

Par ailleurs, les résidus solides carbonés (18) formés pendant la thermolyse sont récupérés par une tubulure (11) telle qu'une vis sans fin disposée au bas du réacteur (13), pour amener ces résidus à une zone de stockage (50) formée de deux réservoirs, l'un se chargeant à pression réduite, l'autre pour ramener les résidus à la pression atmosphérique et alternativement.

Les résidus solides carbonés obtenus sont riches en carbone, mais également en produits polluants, tels que du chlore, du soufre ou du phosphore.

Ces résidus se présentent sous la forme d'une poudre très fine pulvérulente que l'on tamise en (52), par exemple par passage sur des écrans permettant de refuser tous les résidus ayant une dimension prédéterminée supérieure à quelques micromètres, tels que par exemple des résidus d'os entièrement thermolysés, carbonés pendant le traitement dans le réacteur (13). La poudre acceptée est acheminée à la seconde chambre de combustion (60). En revanche, les refus de tamisage réinjectés dans la trémie (4) puis de là dans le réacteur (13) pour mieux retenir les agents polluants.

La seconde chambre de combustion (60) comprend essentiellement un brûleur spécifique (61) pour charbon pulvérulent. Cette chambre (60) alimente à son tour un second générateur de vapeur (65) similaire à (22).Les cendres (68) obtenues dans la deuxième chambre de combustion (60) sont mises en décharge de résidus ultimes.

Le second générateur de vapeur (65) est associé à une unité de traitement des filmées (78) destinée à récupérer les agents polluants (79) pour les mettre également en décharge de résidus ultimes.

La vapeur produite par le second générateur (60) est amenée par une tubulure (62) analogue à (25) à l'unité (1) de production de farines de viandes, notamment dans l'ensemble de séchage des carcasses de viandes ou dans l'ensemble destiné à sécher les farines produites.

De la sorte, l'installation ne rejette vers l'extérieur que des fumées réputées propres et des résidus ultimes, puisque toute l'énergie produite transformée en vapeur est réinjectée dans l'installation, donc est valorisée..

La fraction gazeuse amenée dans la première chambre de combustion (20) et les résidus solides amenés dans la seconde chambre de combustion (60) sont brûlés à une température voisine de 850°C pendant deux secondes au moins. La destruction thermique est alors complète et permet d'optimiser la valorisation du contenu énergétique des farines, sous forme de vapeur utilisée sur le site, voire en partie en dehors de ce site.

L'installation conforme à l'invention présente de nombreux avantages par rapport à celles connues à ce jour. On peut citer :
. une simplicité opératoire ;
. la mise en oeuvre d'équipements éprouvés ,
. un concept modulaire autorisant une mise en place aisée et rapide ;
. l'absence de rejet liquide ;
. une excellente sécurité et une bonne qualité du traitement thermique, puisqu'il n'y a pas d'imbrûlé ;
. le fait qu'à partir d'un déchet, on obtient seulement des cendres ;
. la possibilité de réaliser des démarrages et des arrêts rapides et propres, avec possibilité de mise en veille ;
. des coûts d'investissement compétitifs, des coûts de traitement et de maintenance faibles, l'absence de coûts annexes liés au traitement destiné à des eaux usées ;
. une très bonne valorisation énergétique des déchets, puisque pour 200 kilos/heure de déchets hospitaliers, on peut obtenir jusqu'à 600 kilos/heure de vapeur à 8 bars ou équivalent.

De la sorte, cette installation peut être utilisée avec succès pour le traitement des déchets de toute nature, tels que les déchets domestiques, industriels, hospitaliers, les boues de stations d'épuration ou autres, voire même sur le site de production de ces déchets, mais sans faire appel à des installations lourdes, dont on sait qu'elles sont de plus en plus coûteuses et délicates à opérer dans des conditions respectueuses de l'environnement.

## Revendications

1. Installation pour le traitement par thermolyse de déchets comportant une fraction organique et présentant une granulométrie contrôlée, et simultanément pour la valorisation énergétique de ces déchets, du type comprenant essentiellement :
- une unité de chargement (1) et d'amenée des déchets à traiter ;
- un réacteur de thermolyse (13) de dissociation thermique sous pression réduite à haute température,
- en amont (5) et en aval (50) du réacteur (13), un sas destiné à maintenir une dépression dans le réacteur pour assurer la thermolyse dans une atmosphère à très faible teneur en oxygène ;
- des premiers moyens (15) pour récupérer la fraction gazeuse organique formée pendant la thermolyse, et des moyens (16) pour amener cette fraction gazeuse à une chambre de combustion (20) alimentant un générateur de vapeur (22) ;
- des seconds moyens (51) pour récupérer les produits solides carbonés (18) formés pendant la thermolyse, et pour amener ces produits solides à une chambre de combustion (60) alimentant un générateur de vapeur (65) ou un système d'évacuation ;
***caractérisée* :**
• **en ce que** les premiers moyens (15) pour récupérer la fraction gazeuse sont disposés en partie supérieure du réacteur (13) ;
• **en ce que** les seconds moyens (51) pour récupérer les produits solides carbonés (18) sont disposés au bas du réacteur (13);
• **en ce que** les gaz de la chambre de combustion et la vapeur produite par le générateur de vapeur, alimentent à leur tour l'unité de production des déchets et/ou un moyen de séchage préalable des déchets, disposé juste en amont du réacteur (13).

2. Installation selon la revendication 1, **caractérisée en ce que** les déchets sont préalablement broyés pour les amener à une granulométrie contrôlée et homogène.

3. Installation selon la revendication 1, **caractérisée en ce que** les déchets (2) subissent préalablement un séchage (6) destiné à abaisser leur teneur en eau..

4. Installation selon la revendication 1, **caractérisée en ce que** sur le parcours des déchets, entre l'organe d'amenée (1) et le réacteur (13), on dispose un moyen d'ajout (11) d'un agent de neutralisation des composants agressifs.

5. Installation selon la revendication 1, **caractérisée en ce que** le réacteur (13) de thermolyse fonctionne en quasi absence d'oxygène à une température comprise entre 400 et 1000 °C, sous une pression maintenue entre 5000 et 40000 pascals en dessous de la pression atmosphérique.

6. Installation selon la revendication 1, **caractérisée en ce que** les sas (5, 50) sont choisis dans le groupe constitué par les vis hélicoïdales de compression, les pompes, les vannes à guillotine.

7. Installation selon la revendication 1, **caractérisée en ce que** pendant le transfert depuis le réacteur (13) jusqu'à la chambre de combustion (20), la fraction gazeuse de thermolyse est à haute température.

8. Installation selon l'une des revendications précédentes, **caractérisée en ce que** le produit solide carboné (18) obtenu après thermolyse est séparé en deux sous produits, un produit non combustible (71, 75) et un produit combustible (53), et **en ce que** seul ledit produit combustible (53) est acheminé dans la chambre de combustion (60), le produit non combustible (71, 75) étant revalorisé.

9. Installation selon la revendication 8, **caractérisée en ce que** les produits solides carbonés (18) sont refroidis de façon indirecte avant ou après le sas (50), de manière à éviter tout risque d'explosion.

10. Installation selon la revendication 8, **caractérisée en ce que** la fumée obtenue après combustion des produits solides carbonés est acheminée à une unité de traitement des filmées (78), destinée à récupérer les agents polluants pour les mettre en décharge de résidus ultimes.

## Patentansprüche

1. Anlage zur Thermolyse-Behandlung von Abfällen mit einer organischen Fraktion, welche eine kontrollierte Korngröße aufweisen, und gleichzeitig zur energetischen Verwertung dieser Abfälle, welche im wesentlichen folgendes umfaßt:
- eine Einheit zur Befüllung (1) und Zufuhr der zu behandelnden Abfälle;
- einen Thermolyse-Reaktor (13) zur thermischen Dissoziation unter reduziertem Druck bei hoher Temperatur;
- eine zur Aufrechterhaltung eines Unterdrucks in dem Reaktor zur Sicherstellung der Thermolyse in einer Atmosphäre mit sehr geringem Sauerstoffgehalt bestimmte Schleuse vor (5) und hinter (50) dem Reaktor (13);
- erste Mittel (15) zur Wiedergewinnung der organischen gasförmigen Fraktion, welche während der Thermolyse gebildet wird, und Mittel (16) für die Zufuhr dieser gasförmigen Fraktion in eine Verbrennungskammer (20), welche einen Dampfgenerator (22) speist;
- zweite Mittel (51) zur Wiedergewinnung der während der Thermolyse gebildeten kohlenstoffhaltigen Feststoffe (18) und für die Zufuhr dieser Feststoffe in eine Brennkammer (60), welche einen Dampfgenerator (65) oder ein Entleerungssystem speist;
**dadurch gekennzeichnet,**
• **daß** die ersten Mittel (15) zur Wiedergewinnung der gasförmigen Fraktion im oberen Teil des Reaktors (13) angeordnet sind;
• **daß** die zweiten Mittel (51) zur Wiedergewinnung der kohlenstoffhaltigen Feststoffe (18) im Unterteil des Reaktors (13) angeordnet sind;
• **daß** die Gase der Brennkammer und der durch den Dampfgenerator erzeugte Dampf ihrerseits die Einheit zur Produktion der Abfälle und/oder ein Mittel zur Vortrocknung der Abfälle, welches unmittelbar vor dem Reaktor (13) angeordnet ist, speisen.

2. Anlage nach Anspruch 1, **dadurch gekennzeichnet, daß** die Abfälle zuvor zerkleinert werden, um ihnen eine kontrollierte und homogene Korngröße zu verleihen.

3. Anlage nach Anspruch 1, **dadurch gekennzeichnet, daß** die Abfälle (2) zuvor einer zur Senkung ihres Wassergehalts bestimmten Trocknung (6) ausgesetzt werden.

4. Anlage nach Anspruch 1, **dadurch gekennzeichnet, daß** auf dem Weg der Abfälle zwischen dem Zufuhrorgan (1) und dem Reaktor (13) ein Mittel zum Hinzufügen (11) eines Neutralisierungsmittels für die aggressiven Bestandteile angeordnet ist.

5. Anlage nach Anspruch 1, **dadurch gekennzeichnet, daß** der Thermolyse-Reaktor (13) beinahe sauerstoffrei bei einer Temperatur zwischen 400 und 1000°C unter einem Druck, der zwischen 5000 und 40000 Pascal unterhalb des atmosphärischen Drucks gehalten wird, funktioniert.

6. Anlage nach Anspruch 1, **dadurch gekennzeichnet, daß** die Schleusen (5,50) aus der durch Schraubenverdichter, Pumpen und Absperrschieber gebildeten Gruppe ausgewählt sind.

7. Anlage nach Anspruch 1, **dadurch gekennzeichnet, daß** beim Transport von dem Reaktor (13) bis zur Brennkammer (20) sich die gasförmige Thermolyse-Fraktion auf einer hohen Temperatur befindet.

8. Anlage nach einem der vorangehenden Ansprüche, **dadurch gekennzeichnet, daß** der nach der Thermolyse erhaltene kohlenstoffhaltige Feststoff (18) in zwei Unterprodukte aufgeteilt wird, nämlich ein nicht brennbares Produkt (71,75) und ein brennbares Produkt (53), und daß allein das brennbare Produkt (53) in die Brennkammer (60) befördert wird, wobei das nicht brennbare Produkt (71,75) wiederverwertet wird.

9. Anlage nach Anspruch 8, **dadurch gekennzeichnet, daß** die kohlenstoffhaltigen Feststoffe (18) indirekt vor oder nach der Schleuse (50) gekühlt werden, um jede Explosionsgefahr auszuschließen.

10. Anlage nach Anspruch 8, **dadurch gekennzeichnet, daß** der nach der Verbrennung der kohlenstoffhaltigen Feststoffe erhaltene Rauch einer Einheit der Rauchgasbehandlung (78) zugeführt wird, welche dazu bestimmt ist, umweltverschmutzende Bestandteile zurückzugewinnen, um sie der Restmüllentsorgung zuzuführen.

## Claims

1. Plant for the treatment by thermolysis of waste comprising an organic fraction and exhibiting a controlled particle size and simultaneously for the upgrading with regard to energy of this waste, of the type essentially comprising:
- a unit for loading (1) and for introducing the waste to be treated;
- a reactor for thermal dissociation thermolysis (13) under reduced pressure at high temperature,
- upstream (5) and downstream (50) of the reactor (13), an isolation means intended to maintain a partial vacuum in the reactor in order to ensure thermolysis in an atmosphere with a very low oxygen content;
- first means (15) for recovering the gaseous organic fraction formed during the thermolysis and means (16) for introducing this gaseous fraction into a combustion chamber (20) feeding a steam generator (22);
- second means (51) for recovering the solid carbonaceous products (18) formed during the thermolysis and for introducing these solid products into a combustion chamber (60) feeding a steam generator (65) or a discharge system;
***characterized:***
• **in that** the first means (15) for recovering the gaseous fraction are positioned in the upper part of the reactor (13);
• **in that** the second means (51) for recovering the solid carbonaceous products (18) are positioned at the bottom of the reactor (13);
• **in that** the gases from the combustion chamber and the steam produced by the steam generator in their turn feed the unit in which the waste is produced and/or a means for predrying the waste positioned immediately upstream of the reactor (13).

2. Plant according to Claim 1, **characterized in that** the waste is premilled in order to bring it to a controlled and homogeneous particle size.

3. Plant according to Claim 1, **characterized in that** the waste (2) is subjected to a predrying intended to lower its water content.

4. Plant according to Claim 1, **characterized in that** a means for adding (11) an agent for the neutralization of the aggressive components is positioned in the path of the waste between the introduction device (1) and the reactor (13).

5. Plant according to Claim 1, **characterized in that** the thermolysis reactor (13) operates in the virtual absence of oxygen at a temperature of between 400 and 1000°C under a pressure maintained between 5000 and 40,000 pascals below atmospheric pressure.

6. Plant according to Claim 1, **characterized in that** the isolation means (5, 50) are chosen from the group formed by helical compression screws, pumps and guillotine valves.

7. Plant according to Claim 1, **characterized in that** the gaseous thermolysis fraction is maintained at high temperature during the transfer from the reactor (13) to the combustion chamber (20).

8. Plant according to one of the preceding claims, **characterized in that** the solid carbonaceous product (18) obtained after thermolysis is separated into two by-products, a non-combustible product (71, 75) and a combustible product (53), and **in that** only the said combustible product (53) is conveyed into the combustion chamber (60), the non-combustible product (71, 75) being upgraded.

9. Plant according to Claim 8, **characterized in that** the solid carbonaceous products (18) are cooled indirectly before or after the isolation means (50), so as to avoid any risk of explosion.

10. Plant according to Claim 8, **characterized in that** the flue gas obtained after combustion of the solid carbonaceous products is conveyed to a unit for the treatment of the flue gases (78), which unit is intended to recover the pollutants in order for them to be disposed of on a landfill site for final waste.
